# EUROPEAN PATENT APPLICATION

(11) **EP 4 449 953 A1**
(43) Date of publication of application: **23.10.2024**
(21) Application number: 23729642.1
(22) Date of filing: 07.02.2023
(51) Int. Cl.: A47H 15/02, A47H 1/04

(54) **CURTAIN HANGING DEVICE**

(30) Priority: 09.12.2021 JP 2021199763
(71) Applicant: TOSO COMPANY, LIMITED, Tokyo 104-0033 (JP)
(72) Inventor: ITO, Eiji, Tokyo 104-0033 (JP); TAKIZAWA, Toshiharu, Tokyo 104-0033 (JP)
(74) Representative: Zacco GmbH
(86) International application number: PCT/JP2023/004010
(87) International publication number: WO 2023/106426

(57) **Abstract**

There is provided a curtain hanging device having good appearance and excellent maintainability while having a simple configuration. The curtain hanging device (5) of the present invention includes a plurality of runners (2) each rotatably supporting wheels (23) and provided with a hanging ring (22) to be engaged with a curtain hook provided on a wave curtain (10), and a coupling body (3) in a tape shape that can be accommodated in an inner space of a curtain rail body (1) that holds the plurality of runners (2) in a travelable state, and detachably attached to the plurality of runners (2) via a plurality of engagement bodies (35) provided at predetermined intervals.

## Description

### Technical Field

The present invention relates to a curtain hanging device, and particularly relates to a curtain hanging device used for a wave curtain.

### Background Art

Wave curtains in which waves are formed in the curtains have become popular in recent years. The wave curtains are curtains having beautiful silhouettes with waves kept at equal intervals and no folds. In order to form a wave in a curtain, it is necessary to regulate intervals of curtain hooks so that the curtain does not become flat when the curtain is closed.

As a method for regulating the intervals of curtain hooks, it is common to use a coupling part for integrating the curtain hooks (Hereinafter, also simply referred to as "hooks".) or curtain runners (Hereinafter, also simply referred to as "runners".) at constant intervals to regulate the intervals of the curtain hooks so that the curtain does not become flat.

Since in a wave curtain, hooks or runners and the coupling part have been conventionally coupled in exposed portions from the curtain rail, of the hooks or runners, the coupling part is exposed from outside, which is not preferable in appearance.

Further, when the coupling part is a string or a cord, if the string or the cord is accommodated in the inner space of the curtain rail, a problem occurs, such as the string or the cord being entangled with a traveling runner, and therefore it is difficult to accommodate the string or the cord in the inner space of the curtain rail. Even if the string or the cord is accommodated in the inner space of the curtain rail, the string or the cord may be hung down from the groove of the bottom surface of the curtain rail and exposed.

Thus, a curtain rail adopting a coupling part other than a string and a cord has been proposed. In this type of curtain rail, for example, the curtain runners are kept at constant intervals in the state in which the curtain is closed, and the curtain runners are coupled with each other via the coupling part formed of a plate-shaped member so that the constant intervals are shorter than the intervals of the curtain hooks (For example, see Patent Literature 1.).

### Document List

### Patent Literature

Patent Literature 1: Japanese Patent Application Publication No. 2002-159395

### Summary of Invention

### Technical Problem

However, when the coupling part formed of a plate-shaped member is used as in Patent Literature 1, it is necessary to fit a fitting protrusion of the coupling part into a fitting hole of the curtain runner, and engage a locking piece of the coupling part and a locking piece of the curtain runner with each other. Thus, assembly is not easy, the number of components is large, and the configuration is complicated.

An object of the present invention, which has been made in view of the above-described problem, is to provide a curtain hanging device having good appearance and excellent maintainability while having a simple configuration.

### Solution to Problem

In order to attain the above-described object, a curtain hanging device of the present invention includes a plurality of runners each provided with a hanging ring to be engaged with a curtain hook provided on a curtain, and a coupling body having a tape shape, capable of being accommodated in an inner space of a curtain rail body that holds the plurality of runners in a travelable state, and detachably attached to the plurality of runners via a plurality of engagement bodies provided at predetermined intervals.

The curtain rail body is a cylindrical body, has a groove portion provided in a bottom wall part forming the cylindrical body along a longitudinal direction with respect to the bottom wall part, and a width in a short-side direction orthogonal to the longitudinal direction of the coupling body is longer than a width of the groove portion.

It is preferable that the engagement bodies each have a C-shaped engagement portion, and detachably engage with engaged portions of the runners.

It is preferable that the runners each have a wheel rotatably supported, and a cover with which the wheel is covered.

It is preferable that the engagement bodies are rotatable in a state in which the engagement bodies are engaged with the engaged portions of the runners.

It is preferable that in the coupling body, a folded portion is formed by pleating.

It is preferable that to the coupling body, a plurality of bars each formed of a rod-shaped body longer than a width in a short-side direction orthogonal to a longitudinal direction are integrally fixed along the short-side direction at constant intervals.

### Effects of Invention

According to the present invention, it is possible to realize a curtain hanging device having good appearance and excellent maintainability while having a simple configuration.

### Brief Description of Drawings

[Fig. 1] (A) illustrates a top view showing a fully closed state in which a curtain hanging device according to an embodiment of the present invention is attached to a curtain rail, and (B) illustrates a sectional view showing an entire configuration.
[Fig. 2] (A) illustrates a top view showing a fully opened state in which the curtain hanging device according to the embodiment of the present invention is attached to the curtain rail, and (B) illustrates a sectional view showing the entire configuration.
[Fig. 3] (A) illustrates a perspective view showing an entire configuration of a runner in the embodiment of the present invention, and (B) illustrates a partially exploded perspective view of the runner.
[Fig. 4] Fig. 4 is a plan view showing a configuration of a coupling body of the curtain hanging device according to the embodiment of the present invention.
[Fig. 5] Fig. 5 is a bottom view showing a state in which the runners are attached to the coupling body in the embodiment of the present invention.
[Fig. 6] Fig. 6 is a perspective view showing a state in which the coupling body is rotatable with respect to the runner in the embodiment of the present invention.
[Fig. 7] (A) illustrates a perspective view of an extended state, and (B) illustrates a contracted state of the coupling body to which pleating is applied in another embodiment of the present invention.
[Fig. 8] (A) illustrates a perspective view, (B) illustrates a front view, and (C) illustrates a side view, each of which shows a configuration of a runner provided with a cover for wheels in another embodiment of the present invention.

### Description of Embodiments

### Summary of Embodiments

First, typical embodiments of the invention disclosed in the present application will be described. Note that in the following explanation, as one example, reference signs in the drawings corresponding to components of the invention are described with parentheses.
[1] A curtain hanging device (5), according to a typical embodiment of the present invention includes a plurality of runners (2) each rotatably supporting a wheel (23) and provided with a hanging ring (22) to be engaged with a curtain hook provided on a curtain (10), and a coupling body (3) having a tape shape, capable of being accommodated in an inner space of a curtain rail body (1) that holds the plurality of runners (2) in a travelable state, and detachably attached to the plurality of runners (2) via a plurality of engagement bodies (35) provided at predetermined intervals.
[2] In the curtain hanging device (5), the curtain rail body (1) is a cylindrical body, has a groove portion (1cv) provided along a longitudinal direction (arrow ab direction) with respect to a bottom wall part (1c, 1c) in the bottom wall part (1c, 1c) forming the cylindrical body, and a width (W2) in a short-side direction orthogonal to the longitudinal direction (arrow ab direction) of the coupling body (3) is longer than a width of the groove portion (1cv).
[3] In the curtain hanging device (5), the engagement bodies (35) each have a C-shaped engagement portion (35a), and detachably engage with engaged portions (25) of the runners (2).
[4] In the curtain hanging device (5), the runners (2) each have a wheel (23) rotatably supported, and covers (39R, 39L) with which the wheel (23) is covered.
[5] In the curtain hanging device (5), the engagement bodies (35) are rotatable in a state in which the engagement bodies (35) are engaged with the engaged portions (25) of the runners (2).
[6] In the curtain hanging device (5), in the coupling body (3), a folded portion (33) is formed by pleating.
[7] In the curtain hanging device (5), to the coupling body (3), a plurality of bars (31) each formed of a rod-shaped body longer than a width (W2) in a short-side direction orthogonal to a longitudinal direction (arrow ab direction) are integrally fixed along the short-side direction at constant intervals.

### <First Embodiment

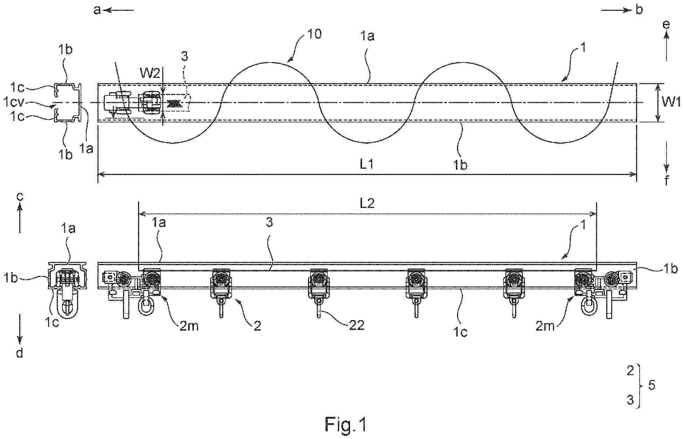

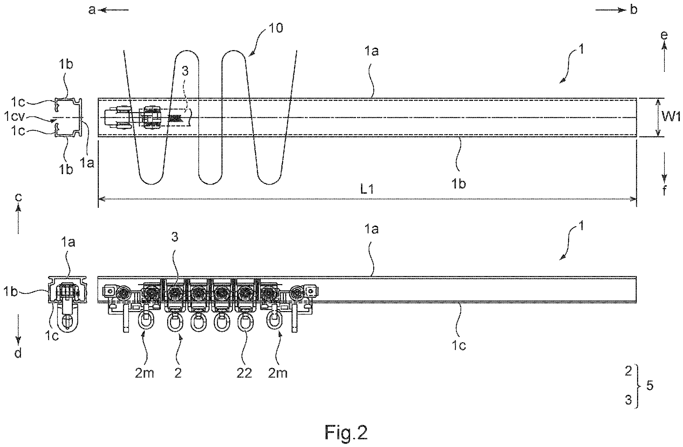

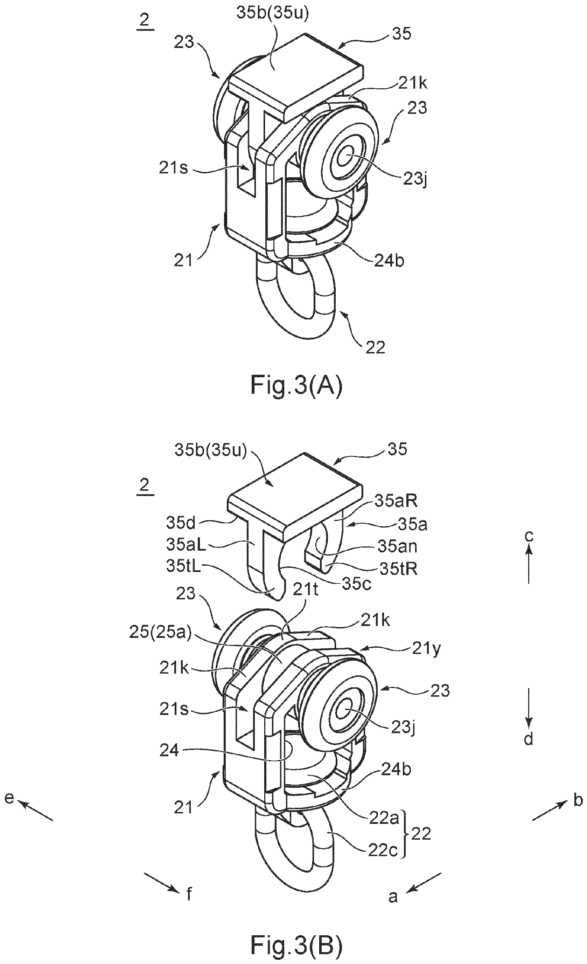

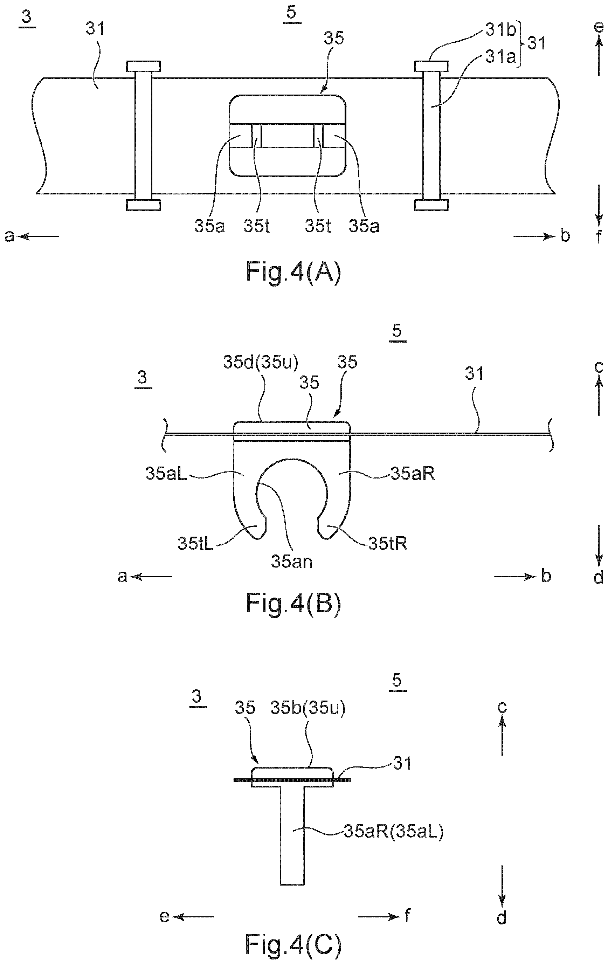

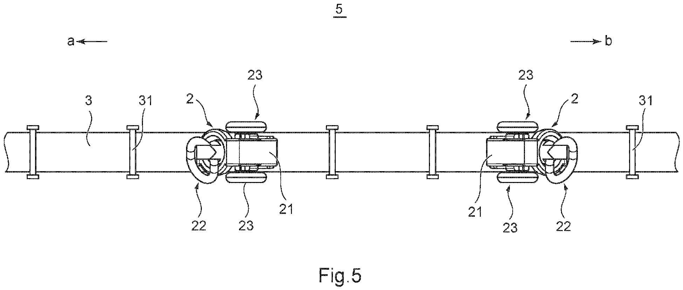

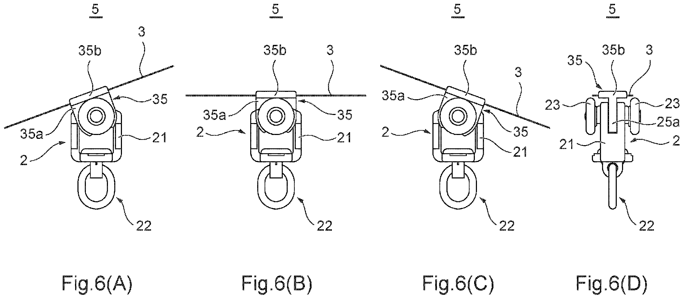

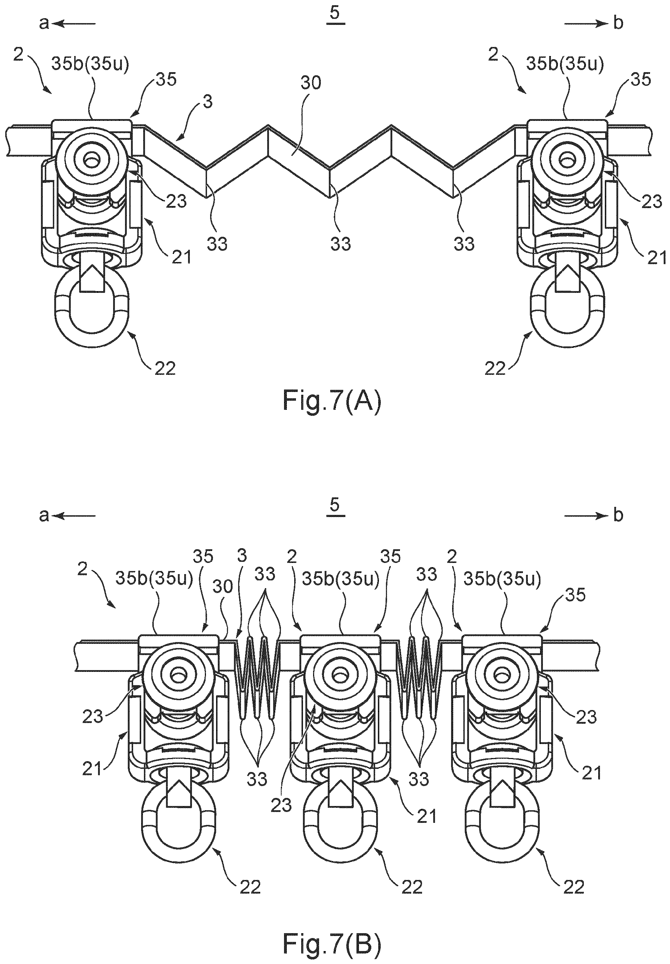

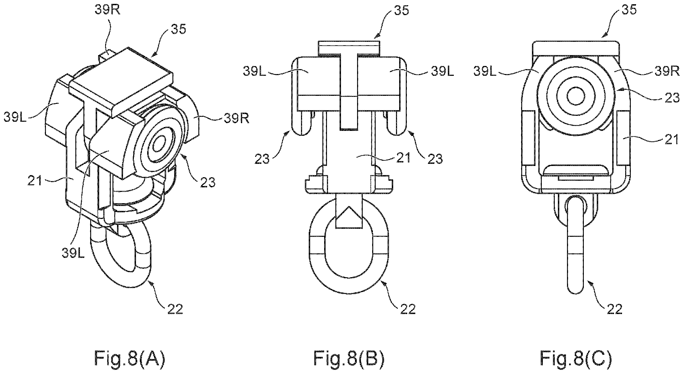

Hereinafter, a first embodiment of the present invention will be specifically described with reference to the drawings. Fig. 1 is a top view (A) showing a fully closed state in which a curtain hanging device according to an embodiment of the present invention is attached to a curtain rail and a sectional view (B) showing an entire configuration. Fig. 2 is a top view (A) showing a fully opened state in which the curtain hanging device according to the embodiment of the present invention is attached to the curtain rail and a sectional view (B) showing the entire configuration. Fig. 3 is a perspective view (A) showing an entire configuration of a runner in the embodiment of the present invention and a partially exploded perspective view (B) of the runner. Fig. 4 is a plan view showing a configuration of a coupling body of the curtain hanging device according to the embodiment of the present invention. Fig. 5 is a bottom view showing a state in which the runners are attached to the coupling body in the embodiment of the present invention. Fig. 6 is a perspective view showing a state in which the coupling body is rotatable with respect to the runner in the embodiment of the present invention. Fig. 7 is a perspective view showing an extended state (A) and a contracted state (B) of the coupling body to which pleating is applied in another embodiment of the present invention. Fig. 8 is a perspective view (A), a front view (B), and a side view (C), each of which shows a configuration of a runner provided with a cover for wheels in another embodiment of the present invention.

Here, for convenience of explanation, in Fig. 1 to Fig. 3, a longitudinal direction of a curtain rail body 1 in a curtain device 100 is defined as an arrow ab direction, a curtain opening side for opening a curtain to the left side in the drawing is defined as an arrow a direction, and a curtain closing side for closing the curtain to the right side in the drawing is defined as an arrow b direction.

Further, an up-down direction in the drawing of the curtain rail body 1 is defined as an arrow cd direction, an upper side or upward is defined as an arrow c direction, and a lower side or downward is defined as an arrow d direction. Further, a depth direction of the curtain rail body 1 is defined as an arrow ef direction, a depth side in the drawing, that is, a window side is defined as an arrow e direction, and a front side, that is, a room side is defined as an arrow f direction.

The curtain device 100 has the curtain rail body 1, and a curtain hanging device 5 (a runner 2 and a coupling body 3). Hereinafter, configurations of the curtain rail body 1, and the curtain hanging device 5 (the runner 2 and the coupling body 3) will be described respectively.

### <Configuration of Curtain Rail Body>

As shown in Fig. 1 and Fig. 2, the curtain rail body 1 is a cylindrical body having a predetermined length in the longitudinal direction (arrow ab direction) as a whole and having an opening portion of a predetermined size. The curtain rail body 1 has a length L1 in the longitudinal direction (arrow ab direction), and a width W1 in a depth direction (arrow ef direction) orthogonal to the longitudinal direction.

The curtain rail body 1 includes a wall part 1a on a ceiling side to be attached to a ceiling (hereinafter, referred to as a "ceiling wall part"), side wall parts 1b and 1b extending toward a lower side (arrow d direction) from both side end portions of the ceiling wall part 1a and facing each other in a state parallel to each other, and bottom wall parts 1c and 1c extending from lower side end portions of the side wall parts 1b and 1b to face each other and disposed parallel to the ceiling wall part 1a in a state with a predetermined space therebetween. In other words, in the curtain rail body 1, the space between the bottom wall part 1c and the bottom wall part 1c is a groove portion 1cv provided along the longitudinal direction (arrow ab direction) with respect to the bottom wall parts 1c and 1c.

In Fig. 1, a fully closed state of the wave curtain 10 attached via a plurality of runners 2 accommodated in an inner space of the curtain rail body 1 is shown. Further, in Fig. 2, a fully opened state of the wave curtain 10 is shown.

The plurality of runners 2 are accommodated in the inner space of the curtain rail body 1. In this case, six runners 2 in total are provided, and all of them have a same basic configuration, but among them, magnet runners 2m are provided at both side end portions. However, the number of runners 2 is not limited to this and may be any number according to the length of the wave curtain 10, and the space between the runner 2 and the runner 2.

### <Configuration of Curtain Hanging Device>

The curtain hanging device 5 is composed of the runners 2 and the coupling body 3. The runner 2 and the coupling body 3 will be respectively described.

### <Configuration of Runner>

As shown in Fig. 3 (A) and (B), the runner 2 of the curtain hanging device 5 has a runner body 21 formed of a molded product of a resin or the like, a hanging ring 22 attached to the runner body 21, and wheels 23 and 23 rotatably supported to be able to travel in the longitudinal direction (arrow ab direction) of the curtain rail body 1 with respect to the runner body 21.

The runner body 21 has a rectangular parallelepiped shape as a whole. A through-hole 24 having a rectangular shape in plan view and penetrating through a back side (arrow e direction) and a front side (arrow f direction) is formed below the wheel 23 of the runner body 21. The hanging ring 22 described later is locked to a bottom portion 24b forming the through-hole 24 of the runner body 21.

The runner body 21 has two mountain-shaped portions 21y and 21y each of which has upper portions each forming a mountain-shape in plan view and is formed in a state parallel with respect to the depth direction (arrow ef direction). A through-hole (not illustrated) is provided in a substantially center of the two mountain-shaped portions 21y, and a rotating shaft 23j is rotatably supported via the through-hole. The wheels 23 and 23 are fixed to both ends of the rotating shaft 23j integrally with the rotating shaft 23j.

The mountain-shaped portion 21y of the runner body 21 has two inclined flat surfaces (Hereinafter, referred to as "inclined flat surface".) 21k and 21k forming the mountain shape, and a surface in an arc shape surface (Hereinafter, referred to as "arc surface".) 21t connected to the two inclined flat surfaces 21k and 21k.

A recessed part space 21s is formed between the two mountain-shaped portions 21y in the depth direction (arrow ef direction), and an engaged portion 25 having a circular shape in plan view and integrated with the two mountain-shaped portions 21y in the recessed part space 21s is provided in the recessed part space 21s.

The engaged portion 25 is formed into a circular column shape in which about 1/5 on a lower side of the circular shape is horizontally cut, and has a circular outer peripheral surface 25a. The engaged portion 25 is a portion to be engaged with an engagement body 35 attached to the coupling body 3 described later and can be detachably attached to the engagement body 35.

The two inclined flat surfaces 21k and 21k of the mountain-shaped portion 21y are surfaces that contact a top plate portion 35b of the engagement body 35 to regulate a rotation angle range when the engagement body 35 engaged with the engaged portion 25 rotates. Further, the arc surface 21t of the mountain-shaped portion 21y is a surface in an arc shape that contacts an inner peripheral surface 35an when the engagement body 35 rotates.

The hanging ring 22 has a locking disk portion 22a to be locked to the bottom portion 24b forming the runner body 21, and a ring 22c integrally attached to the locking disk portion 22a. Specifically, the locking disk portion 22a of the hanging ring 22 is engaged with the bottom portion 24b of the runner body 21, and a ring 22c for hooking a hook (not illustrated) of the wave curtain 10 is exposed from a through-hole (not illustrated) of the bottom portion 24b to a lower side (arrow d direction).

In the state in which the runner 2 is actually accommodated in the curtain rail body 1, the wheels 23 contact the bottom wall parts 1c and 1c of the curtain rail body 1 to be able to travel, and about a lower half of the runner body 21, and the hanging ring 22 are exposed from the groove portion 1cv between the bottom wall parts 1c and 1c. Thereby, the ring 22c of the hanging ring 22 and the hook (not illustrated) of the wave curtain 10 can be engaged with each other.

### <Configuration of Coupling Body>

As shown in Fig. 3 and Fig. 4, the coupling body 3 of the curtain hanging device 5 is a tape-shaped member extending in the longitudinal direction (arrow ab direction) of the curtain rail body 1 and made of polyester, nylon, fiber or the like, and has a tape body 30 with a predetermined length L2 (Fig. 1) and a width W2 (Fig. 1), and engagement bodies 35.

The length L2 of the tape body 30 of the coupling body 3 is shorter than the length L1 (Fig. 1, Fig. 2) in the longitudinal direction (arrow ab direction) of the curtain rail body 1. The width W2 in the short-side direction orthogonal to the longitudinal direction (arrow ab direction) of the tape body 30 is shorter than the width W1 (Fig. 1, Fig. 2) of the curtain rail body 1, but is longer than a width of the groove portion 1cv between the bottom wall parts 1c and 1c of the curtain body 1.

The tape body 30 of the coupling body 3 has a plurality of engagement bodies 35 that are integrally fixed to the tape body 30 at predetermined intervals. The engagement body 35 is formed of a molded product of a resin or the like, and the tape body 30 and the engagement body 35 are integrated by insert molding. However, the present invention is not limited to this, and the engagement body 35 may be integrated with the tape body 30 later by assembly. These engagement bodies 35 are components that are fitted to the engaged portions 25 of the runners 2 by press fit or the like.

The engagement body 35 is formed into a substantially C-shape in plan view, and has a C-shaped engagement portion 35a, and a top plate portion 35b made of a flat plate-shaped member that is integrated on an upper side of the C-shaped engagement portion 35a.

The C-shaped engagement portion 35a is integrally fixed to a center in the depth direction (arrow ef direction) of the top plate portion 35b to be along the longitudinal direction (arrow ab direction). The C-shaped engagement portion 35a has two arm portions 35aR and 35aL extending toward a lower side (arrow d direction), and an inner peripheral surface 35an in a C-shape is formed inside the two arm portions 35aR and 35aL.

The arm portions 35aR and 35aL of the C-shaped engagement portion 35a extend toward the lower side (arrow d direction) from an undersurface 35d of the top plate portion 35b, and are curved slightly toward tips as a whole. As a result of the arm portion 35aR and the arm portion 35aL being curved toward the tips, the inner peripheral surface 35an in a C-shape is formed, and a tip portion 35tR of the arm portion 35aR and a tip portion 35tL of the arm portion 35aL face each other.

A space between the tip portion 35tR of the arm portion 35aR and the tip portion 35tL of the arm portion 35aL is smaller than a diameter of the outer peripheral surface 25a in a circular shape of the engaged portion 25 of the runner 2. In other words, when the engagement body 35 is attached to the runner 2, the two arm portions 35aR and 35aL of the C-shaped engagement portion 35a are pushed apart and thereby engaged with the engaged portion 25 of the runner 2. On the other hand, the engagement body 35 is pulled with respect to the runner 2, whereby the two arm portions 35aR and 35aL of the C-shaped engagement portion 35a are pushed apart, and the engagement body 35 is detached from the engaged portion 25 of the runner 2.

A space between the engagement body 35 and the engagement body 35 adjacent to each other in the tape body 30 of the coupling body 3 is set to a length at which a constant curved wave is formed in the wave curtain 10 when the wave curtain 10 is in a fully closed state (Fig. 1).

Further, in the tape body 30, a bar 31 formed of a rod-shaped body longer than the width W2 of the tape body 30 is integrally attached between the engagement body 35 and the engagement body 35. The bar 31 is composed of a shaft portion 31a in a circular column shape, and tip portions 31b each in a disk shape fixed to both side tips of the shaft portion 31a. Note that the bar 31 may be constituted of only the shaft portion 31a.

The tip portion 31b of the bar 31 protrudes outside the coupling body 3 and is engageable with the bottom wall part 1c of the curtain rail body 1. This prevents the coupling body 3 from falling off from the curtain rail body 1 by some chance. Incidentally, even when the width W2 of the tape body 30 is shorter than the width of the groove portion 1cv between the bottom wall parts 1c and 1c of the curtain rail body 1, the coupling body 3 is prevented from falling off from the curtain rail body 1 because the bars 31 longer than the width of the groove portion 1cv are integrally attached to the tape body 30.

As shown in Fig. 5, when the runners 2 are accommodated in the inner space of the curtain rail body 1 in the state in which the runners 2 are respectively attached to the engagement bodies 35 of the tape body 30, the wheels 23 of the runners 2 contact the bottom wall parts 1c and 1c of the curtain rail body 1.

However, at this time, the tip portions 31b of the bars 31 of the coupling body 3 do not contact the bottom wall parts 1c and 1c of the curtain rail body 1 (see Fig. 1 and Fig. 2). Even if all the runners 2 are disengaged from the engagement bodies 35, the tip portions 31b of the bars 31 contact the bottom wall parts 1c and 1c, and the bars 31 of the coupling body 3 are prevented from falling off.

### <Operation and Effects>

In the above configuration, in the curtain hanging device 5 in the present embodiment, the C-shaped engagement portion 35a of the engagement body 35 attached to the tape body 30 of the coupling body 3 is fitted to the engaged portion 25 of the runner 2. As a result, in the curtain hanging device 5, it is possible to easily attach the runner 2 to the tape body 30 of the coupling body 3 to integrate both of them.

As mentioned above, after the plurality of runners 2 are integrally attached via all the engagement bodies 35 of the tape body 30, the wheels 23 of the runners 2 are accommodated so as to slide in contact with the bottom wall parts 1c and 1c of the curtain rail body 1.

Thereby, attachment of the coupling body 3 and the runners 2 to the curtain rail body 1 is completed. Thereafter, when the hooks of the wave curtain 10 are engaged with the hanging rings 22 of the runners 2, the curtain device 100 is completed.

Further, in the curtain device 100, the tape body 30 and the engagement body 35 are integrated in advance in the coupling body 3, and it is possible to easily attach the runner 2 to the coupling body 3 by a simple operation of only pushing the C-shaped engagement portion 35a of the engagement body 35 to the engaged portion 25 of the runner 2.

In the curtain device 100, the width W2 of the coupling body 3 is made larger than the width of the groove portion 1cv between the bottom wall parts 1c and 1c of the curtain rail body 1, and the coupling body 3 and the bottom wall parts 1c and 1c are disposed to be parallel to each other. As a result, in the curtain device 100, in the state in which the coupling body 3 and the plurality of runners 2 are accommodated in the inner space of the curtain rail body 1, the coupling body 3 does not fall off or is not even exposed from the groove portion 1cv of the curtain rail body 1, and therefore, it is possible to improve appearance in terms of exterior design.

Since in the curtain device 100, the curtain hanging device 5 composed of the coupling body 3 and the plurality of runners 2 is accommodated in the inner space of the curtain rail body 1 in this manner, the coupling body 3 and the runners 2 are not caught by the hooks of the wave curtain 10, protrusions from a wind frame and the like, and the wave curtain 10 can be smoothly opened and closed. Note that the coupling body 3 is the tape body 30, and therefore, is not caught by the runners 2, and the wheels 23 of the runners 2 as compared with a string or the like.

Further, the plurality of bars 31 are fixed to the coupling body 3 at constant intervals along the longitudinal direction (arrow ab direction), and therefore, even if all the runners 2 are detached from the tape body 30, the tip portions 31b of the bars 31 contact the bottom wall parts 1c and 1c of the curtain rail body 1. As a result, the coupling body 3 is prevented from hanging from the groove portion 1cv of the curtain rail body 1 and being exposed.

The runners 2 are detachably attached to the engagement bodies 35 of the coupling body 3 via the engaged portions 25 of the runner bodies 21. Therefore, even if the runner 2 is damaged, it is possible to easily detach the runner 2 with respect to the coupling body 3 and replace the runner 2, and thus maintainability is excellent. Further, since the runner 2 is attachable and detachable with respect to the coupling body 3, a magnet runner 2m other than the ordinary runner 2 can also be attached, which has high versatility as the curtain hanging device 5.

As shown in Fig. 6 (A) to (D), since the C-shaped engagement portion 35a in the engagement body 35 of the coupling body 3 has the inner peripheral surface 35an in a circular shape (Fig. 3 and Fig. 4), and the engaged portion 25 of the runner 2 has the outer peripheral surface 25a in a circular shape, the engagement body 35 is rotatable in a clockwise direction or a counterclockwise direction via the rotating shaft 23j in the state in which the C-shaped engagement portion 35a and the engaged portion 25 are engaged with each other.

Accordingly, when the wave curtain 10 is brought into a fully opened state in the curtain device 100 (see Fig. 2), the tape body 30 of the coupling body 3 is in a state of being easily folded between the runner 2 and the runner 2, since the engagement body 35 is rotatable. As a result, the curtain hanging device 5 can fold the coupling body 3 compactly and beautifully in the inner space of the curtain rail body 1. Thus, the tape body 30 of the coupling body 3 is folded, and therefore, the coupling body 3 is prevented from hanging and being exposed from the groove portion 1cv of the curtain rail body 1.

### <Other Embodiments>

Note that in the aforementioned embodiment, the case where the curtain hanging device 5 uses the coupling body 3 formed of the tape-shaped member which is flat and has no folds is described. However, the present invention is not limited to this, and as shown in Fig. 7 (A) and (B), a folded portion 33 may be provided at every predetermined interval by further applying pleating (folding) to the tape body 30 of the coupling body 3. Thereby, when the wave curtain 10 is brought into a fully opened state, the coupling body 3 is regularly folded at a same length via the folded portions 33. Further, since the tape body 30 of the coupling body 3 is regularly folded, the coupling body 3 is prevented from hanging and being exposed from the groove portion 1cv of the curtain rail body 1.

Further, in the aforementioned embodiment, in the runner 2, the wheels 23 are exposed, but the present invention is not limited to this, and as shown in Fig. 8, covers 39R and 39L may be provided on upper portions of the wheels 23 as shown in Fig. 8. As a result, it is possible to reliably avoid entanglement of the runner 2 with the coupling body 3 by the covers 39R and 39L while the runner 2 is traveling in the inner space of the curtain rail body 1.

Further, in the aforementioned embodiment, the case where the C-shaped engagement portion 35a of the coupling body 3 and the engaged portion 25 in a circular shape of the runner 2 are engaged with each other is mentioned, but the present invention is not limited to this, as long as the coupling body 3 and the runner 2 are detachably engaged with each other, the coupling body 3 may have the engaged portion 25, whereas the runner 2 may have the C-shaped engagement portion 35a, and further, as long as both of them can be detachably engaged with each other, they may have any shapes.

Furthermore, in the aforementioned embodiment, the case where the wave curtain 10 is attached to the runner 2 of the curtain hanging device 5 is mentioned, but the present invention is not limited to this, and regardless of the wave curtain 10, curtains in other various forms such as a pleated curtain, and a flat curtain may be attached to the runners 2 of the curtain hanging device 5.

While preferred embodiments of the present invention are described thus far, the present invention is not limited to the above-described embodiments, and includes all aspects included in the idea and the claims of the present invention. Further, in order to exhibit at least part of the problems and effects mentioned above, the respective configurations may be properly combined selectively. For example, shapes, materials, dispositions, sizes and the like of the respective components in the above-described embodiments can be properly changed according to a specific usage mode of the present invention.

### List of Reference Signs

1 curtain rail body
1cv groove portion
2 runner
3 coupling body
3h through-hole
5 curtain hanging device
10 wave curtain
21 runner body
21y mountain-shaped portion
22 hanging ring
22a locking disk portion
22c ring
23 wheel
23j rotating shaft
24 through-hole
25 engaged portion
30 tape body
31 bar
31a shaft portion
31b tip portion
35 engagement body
35a C-shaped engagement body
35b top plate portion
39R, 39L cover
100 curtain device

## Claims

1. A curtain hanging device, comprising:
a plurality of runners each provided with a hanging ring to be engaged with a curtain hook provided on a curtain; and
a coupling body having a tape shape, capable of being accommodated in an inner space of a curtain rail body that holds the plurality of runners in a travelable state, and detachably attached to the plurality of runners via a plurality of engagement bodies provided at predetermined intervals.

2. The curtain hanging device according to claim 1, **characterized in that**
the curtain rail body is a cylindrical body, has a groove portion provided in a bottom wall part forming the cylindrical body along a longitudinal direction with respect to the bottom wall part, and a width in a short-side direction orthogonal to the longitudinal direction of the coupling body is longer than a width of the groove portion.

3. The curtain hanging device according to claim 1 or 2, **characterized in that**
the engagement bodies each have a C-shaped engagement portion, and detachably engage with engaged portions of the runners.

4. The curtain hanging device according to claim 1 or 2, **characterized in that**
the runners each have a wheel rotatably supported, and a cover with which the wheel is covered.

5. The curtain hanging device according to claim 1 or 2, **characterized in that**
the engagement bodies are rotatable in a state in which the engagement bodies are engaged with the engaged portions of the runners.

6. The curtain hanging device according to claim 1 or 2, **characterized in that**
in the coupling body, a folded portion is formed by pleating.

7. The curtain hanging device according to claim 1 or 2, **characterized in that**
to the coupling body, a plurality of bars each formed of a rod-shaped body longer than a width in a short-side direction orthogonal to a longitudinal direction are integrally fixed along the short-side direction at constant intervals.
